# EUROPEAN PATENT APPLICATION

(11) **EP 1 478 123 A1**
(43) Date of publication of application: **17.11.2004**
(21) Application number: 03291156.2
(22) Date of filing: 16.05.2003
(51) Int. Cl.: H04L 12/24

(54) **Operation and maintenance center with enhanced documentation of operations**

(71) Applicant: Evolium S.A.S., 75008 Paris (FR)
(72) Inventor: Fiat, Lionel, 92100 Boulogne Billancourt (FR)
(74) Representative: Brose, Gerhard, Dipl.-Ing.

(57) **Abstract**

The invention relates to an Operation and Maintenance Center (OMC) intended for the O&M management of an Operators telecommunication network, providing at least display, input and communication means for an operator and/or other external management application tools to view information related to the telecommunication network elements (NE) under the management scope, to introduce command actions to manage said network elements (NE), and to communicate said actions to the network elements or receive status information from them, wherein further means are provided for the operator or the external management application to enter comment information to said command actions.

It also relates to a method for managing a telecommunications network using an Operation and Maintenance Center (OMC) as described above.

## Description

The present invention relates to the field of Telecommunications Management Networks, and more specifically to an Operation and Maintenance (O&M) Center.

The purpose of a Telecommunications Management Network is to support the management requirements of the telecommunication operators to plan, provision, install, maintain, operate and administer telecommunication networks and services. An Operation and Maintenance Center is known as a part of the Telecommunication Management Network which provides dynamic monitoring and control of operation and maintenance of the telecommunications network elements operating in a given geographical area.

The Operation and Maintenance Center provides a framework through which a plurality of management functional tasks can be executed; Configuration Management, Fault Management, Performance Management, Accounting Management and Security Management are some of the functions which can be provided to the operator to support the management of his telecommunications network. Configuration Management, for example, defines a number of services which enable the structure, and thus the characteristics of a communications network to be changed by the operator. Provision is also made for access to, and display of, the management information contained within the Telecommunications Management Network to operator staff.

The operation and maintenance of a communications network can be managed from a workstation of an Operation and Maintenance Center known as an Operation and Maintenance Terminal. Within the scope of a Configuration Management, for example, a number of operators of the Operation and Maintenance Center, which are working independently of one another in any of the Operation and Maintenance Terminals can simultaneously change the configuration of a communications network by executing a number of Configuration Processes. A Configuration Process is usually initiated with a "start configuration" command which is issued manually by the operator and, in the normal case, it is concluded with an "end configuration" command when all changes in configuration are entered. It is also possible that the commands are entered automatically by a specific external management application connected to the Operation and Maintenance Center with the object of speeding up and helping the task of the operator. All these practices are well known for those skilled in the art.

Nowadays, a major problem with this approach is that although these command actions are introduced, logged or traced in the Operation and Maintenance Terminal, the operator cannot add any comment information to them to precise the reason of the action. When a command is entered it will be executed and after that the Operation and Maintenance Center will wait for a new command action to be entered. Also disadvantageous is that, an operator cannot clearly distinguish operator manual command actions from automatically generated external command tool actions.

The object of the invention is to overcome the above listed problems of the current state of the art Operation and Maintenance Centers by the development of a an Operation and Maintenance Center in which the operator is able to introduce comment information for individual or a group of O&M command actions.

The object is achieved according to the invention by an Operation and Maintenance Center intended for the O&M management of an Operators telecommunication network, providing at least display, input and communication means for an operator and/or other external management application tools to view information related to the telecommunication network elements under the management scope, to introduce command actions to manage said network elements, and to communicate said actions to the network elements or receive status information from them, wherein means are also provided for the operator or the external management application to enter comment information to said command actions.

The object is also achieved by a method for managing a telecommunications network by means of a Telecommunication Management Network which comprises at least one Operation and Maintenance Center in which O&M commands are manually entered by and operator or communicated from an external management application to actuate on a Network Element of said telecommunications network, wherein said external management application or said operator is allowed or forced to introduce a comment to said command actions.

The invention described here will help operators to reduce their exploitation cost which nowadays is an important criteria at the operator product choice step. The telecommunications network deployment and exploitation Operator staff is allowed or forced to systematically add comments to the management actions they take, thus the management of the network (tracking the reasons of why actions were taking) is more clear and also the learning cycle for new team members is shorter. This Operation and Maintenance Center, according to the invention, will bring added value to the Operators know-how capitalization and facilitate the information exchange between the different network exploitation Operator team members.

Advantageous configurations of the invention emerge from the dependent claims, the following description and the drawings.

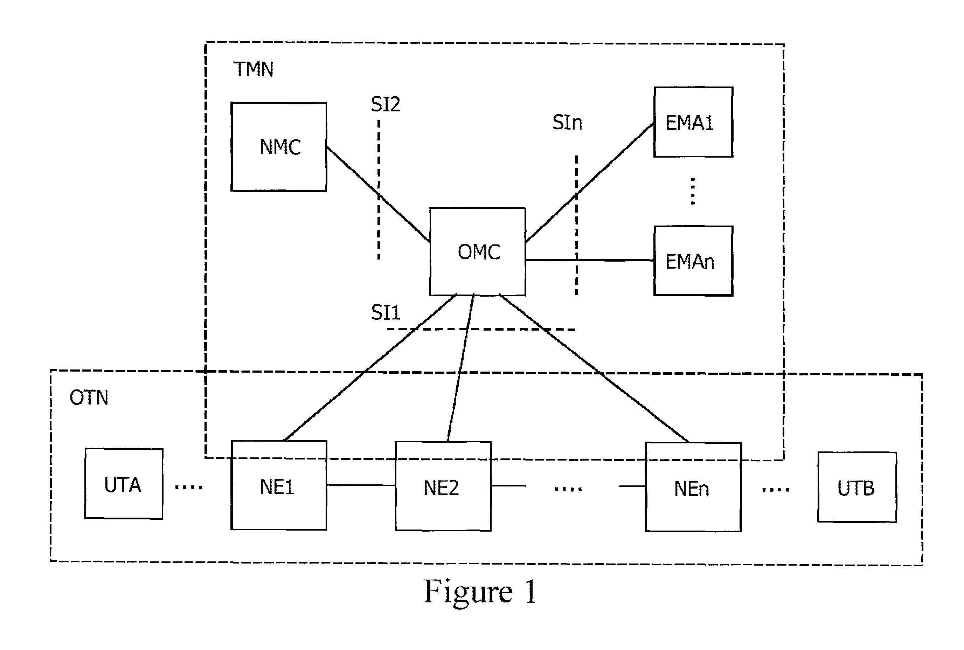

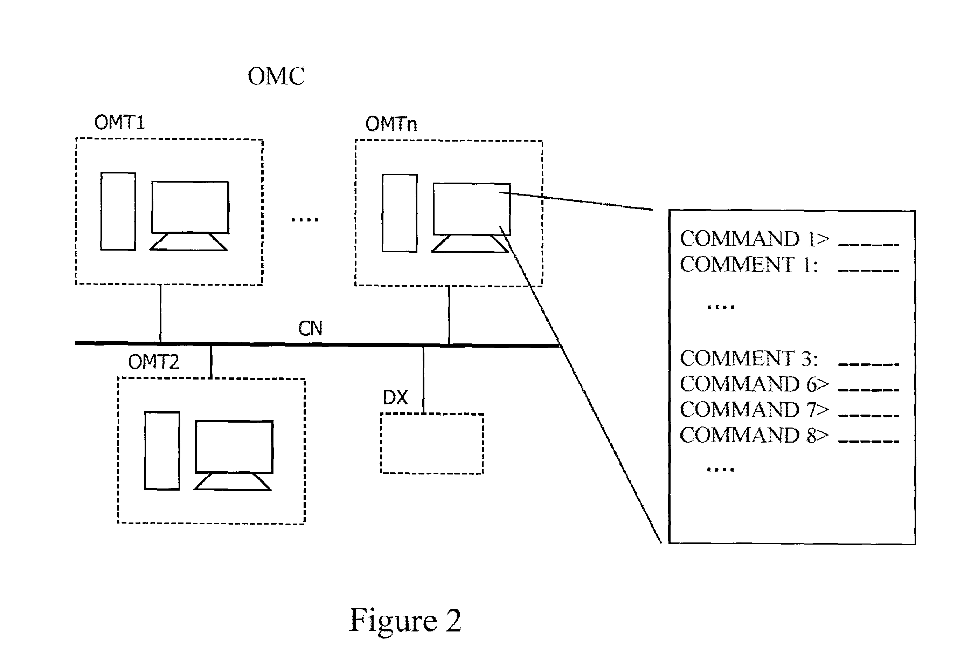

An embodiment example of the invention is now explained with the aid of Figures 1 and 2.
Figure 1 shows a block diagram of a Telecommunications Management Network comprising an Operation and Management Center according to the invention.
Figure 2 shows an Operations and Maintenance Center according to the invention.

Figure 1 shows a Telecommunications Management Network TMN which is intended to support the management of an Operator Telecommunications Network OTN. In the Telecommunications Management Network TMN embodiment example, an Operator and Maintenance Center OMC is connected via standardized interfaces SI1 to SIn to a plurality of external management elements such as a Network Maintenance Center NMC and other External Management Applications EMA1 to EMAn and to the network elements NE1 to NEn of the Operator Telecommunications Network OTN which are under management scope. The Operator Telecommunication Network OTN consists of many types of analogue and digital telecommunications equipment and associated support equipment; this comprises typically user terminal equipment UTA, UTB which is interconnected via a plurality of operator transmission systems, switching systems, multiplexes, signalling terminals, servers, etc., which when managed, such equipment is generally referred to as Network Elements NE1 to NEn.

In order to integrate the Operation and Management Center OMC into the network management environment of the telecommunications operator, the Operation and Maintenance Center OMC provides a set of open interfaces SI1 to SIn enabling external management application tools to access the data it manages and/or transmit specific O&M network command actions. Examples of such potential multivendor external applications are the Network Management Centers NMC which provide global and centralised monitoring and control by being at the top of the maintenance hierarchy; the Radio Network Optimization applications which provide specific services to the operator to increase the performance of its mobile communications network; or Quality of Service (QoS) reporting applications.

Figure 2 shows an Operation and Maintenance Center. In the shown embodiment example, the Operation and Maintenance Center comprises a plurality of Operation and Maintenance Terminals OMT1 to OMTn and other devices DX which are connected via a communications network CN, such as an IP network.

The Operation and Maintenance Terminals OMT1 to OMTn can be commonly used IT equipment such as workstations or personal computers and may be organized and work in a client-server manner. For example, the management applications of the Operation and Maintenance Center can be hosted on a server and the operator staff user interfaces can be hosted on the clients. All of them may be connected via an IP network. Other devices DX which may be connected to the communications network CN are for example printer devices, external communication devices, specific-purpose database servers, etc.

The Operation and Maintenance Terminals provide display, input and communication means so that the operator staff can view information and execute O&M command actions for the management tasks under their scope. In a possible scenario, a number of operator staff members may be working on different Operation and Maintenance Terminals OMT of a central Operation and Maintenance Center OMC at the same time and in parallel sessions, each managing a different task on the operator telecommunications network. The operator staff manually introduces the corresponding O&M commands via the available input means in a sequential manner and is able to view and trace the execution of said commands in the display. When needed, the operator staff can also trace commands executed at any previous time which were manually introduced or which belong to a programmed batch process or which were automatically generated by an external management application tool connected to the Operation and Maintenance Center.

According to the present invention, the operator staff can also configure the Operation and Maintenance Terminal to force a determined operator or a group of them to add a comment, for every command introduced or for a group of manually or automatically generated commands, to precise the reason for the command action. For example, if the operator replaces a Network Element software version and on a next step rejects it for any reason and falls back to the previous one, he may add the reason why he rejected it; or when he changes any Network Element Radio configuration parameters, he may add the reason why he changes each parameter; or even when at any time a Network Element manufacturer requires the operator to change the Network Element configuration, the operator may add a comment, for instance, such as "Alcatel Change Request: radio power control default value to be set to 100mW". Even a external management application tool may be forced to add a comment for the commands it generates.

The operator may even perform an action or a group of them with the corresponding comment(s) and link this to a determined O&M event. When said event happens again and is identified by the Operation and Maintenance Center, said added information in the form of command comments may be displayed on the Operation and Maintenance Terminal to give suggestions to the operator. The Operational and Maintenance Center OMC may also offer a search feature among historical action comments to help network exploitation staff to easily find previous action comments linked to a determined event or to their current task.

Note that Figure 2 only shows an example of how this new feature could be implemented. Here it is shown how textual information is introduced after each command action or before a group of them. The Operation and Maintenance Center OMC displays on the Operation and Maintenance Terminal OMT a command line indicating that it is waiting for a command action. When the operator introduces a command, and the Operator and Maintenance Center has been configured to force the operator to add a comment, then the Operator and Maintenance Center will present the operator a comment line requiring him to introduce a text which will be linked to said command. In case the Operation and Maintenance Center is not configured to force the operator to introduce a comment for every command, it will still provide input means to enable the operator to do it for some individual commands or a group of them. For example, the operator can mark a group of commands coming from an external management application tool and check an option provided in the display of the Operation and Maintenance Terminal OTM to indicate that he wants to add a comment. Of course it is understood that the Operation and Maintenance Center can be also configured to force the introduction of said information before or after the selected commands. After the operator has introduced the comment, the Operator and Maintenance Center will continue the process with a command line and so on.

But the possibility to add a comment may be more evolved than the one here shown and it may not be only simple text, that is, it could be structured according to an internal operator or manufacturers structure, action reference, procedure reference, action cause/reason, etc. with different mandatory and/or optional image and/or graphical and/or textual fields, some of said fields being filled with or linking to scrolling lists. Those lists may be created and enriched during the telecommunications network exploitation life cycle and it would be possible to share them between all operators and/or customers and/or manufacturers.

## Claims

1. An Operation and Maintenance Center (OMC) intended for the O&M management of an Operators telecommunication network, providing at least display, input and communication means for an operator and/or other external management application tools to view information related to the telecommunication network elements (NE) under the management scope, to introduce command actions to manage said network elements (NE), and to communicate said actions to the network elements or receive status information from them, **characterized in that** it provides means for the operator or the external management application tools to enter comment information to said command actions.

2. The Operation and Maintenance Center according to claim 1 **characterized in that** it provides configuration means to enable the operator to decide if said command action comment information shall be mandatory or optional.

3. The Operation and Maintenance Center according to claim 1 **characterized in that** it provides means to enable the operator or an external management application tool to search among historical command action comments.

4. The Operation and Maintenance Center according to claim 1 **characterized in that** it provides means to enable the operator or an external management application tool to link said command action comment information to an O&M event.

5. The Operation and Maintenance Center according to claim 4 **characterized in that** it provides means to display said command action comment information and further suggestions when said or a similar O&M event occurs.

6. The Operation and Maintenance Center according to claim 1 **characterized in that** said comment information is an image, graphical or textual information.

7. The Operation and Maintenance Center according to claim 1 **characterized in that** said command comment information is structured according to an internal operator structure and/or with different mandatory and/or optional image and/or graphic and/or text fields, some of said fields being filled with or linking to scrolling lists

8. A method for managing a telecommunications network by means of a Telecommunication Management Network (TMN) which comprises at least one Operation and Maintenance Center (OMC) in which O&M commands are communicated from an external management application or manually entered by and operator to actuate on a Network Element (NE) of said telecommunications network **characterized in that** said external management application or said operator is allowed or forced to introduce a comment to said command actions.
